# EUROPEAN PATENT APPLICATION

(11) **EP 4 676 007 A1**
(43) Date of publication of application: **07.01.2026**
(21) Application number: 25182945.3
(22) Date of filing: 16.06.2025
(51) Int. Cl.: H04L 67/12, H04W 4/70, H04W 4/80

(54) **AMBIENT IOT DEVICE DATA DISCOVERY**

(30) Priority: 03.07.2024 GB 202409666
(71) Applicant: Vodafone Group Services Limited, Newbury RG14 2FN (GB)
(72) Inventor: KULAKOV, Alexey, London, W2 6BY (GB); PUDNEY, Chris, London, W2 6BY (GB); WILD, Peter Alexander, London, W2 6BY (GB); MARTINS, Diogo, London, W2 6BY (GB)
(74) Representative: Boult Wade Tennant LLP

(57) **Abstract**

Method and system for communicating with user equipment, UE, the method comprising the steps of a reader device receiving a request to interrogate one or more UE. In response to the request, the reader device transmitting an initial message to the one or more UE. The one or more UE responding to the initial message by transmitting a first message. The reader device responding to the first message by sending a second message to the one or more UE unless the request received by the reader device to interrogate the one or more UE comprises data indicating that the second message is not required. When a second message is sent by the reader device to the one or more UE, the one or more UE responding to the second message with a third message unless data is received from the reader device by the one or more UE indicating that a response to a second message is not required.

## Description

### Field of the Invention

The present invention relates to a system and method for interrogating user equipment (UE) and in particular Ambient Internet of Things (A-loT) devices.

### Background of the Invention

RFID tags provide identification of objects once they are interrogated by an RFID reader that provides power to the RFID tags (using RF energy). Each RFID tag will respond with a message, usually including a unique identifier. These data are used to identify objects attached to the RFID tags, such as warehouse inventory, retail stock or items to be protected from theft.

3GPP describes Ambient loT (A-loT) as part of Release 19. In release 18, a study item was performed in 38.848. A-loT provides services based on a 3GPP interface similar to those provided by RFID. However, the 3GPP-based system is superior in terms of coverage and function, compared to an RFID system. The main services provided by A-loT are inventory control and command. These services include automated warehousing, medical instrument inventory management, logistics tracking, automotive manufacturing, real-time inventory management (e.g., airport and shipping ports), fresh food supply chains, electronic shelf labels, online modification of medical instruments, greenhouse activation and deactivation, elderly healthcare and alerts, and electronic shelf labelling (alerts and feedback). Within such an enhanced system, it becomes more important to monitor and manage power and system resources of A-loT tags, which may also be described as user equipment (UE).

When a reader device receives a request from a core network to interrogate one or more local UEs, the reader device transmits an initial or paging message. Each UE responds with a first message that contains a random number. Ideally, each UE will respond with a different random number (e.g., 16 bits) that is usually smaller than its unique identifier (which may be around 100 bits). If more than one UE generates the same random number, then the reader device can respond by requesting that those particular UEs regenerate a random number and resend their first message. However, such collisions will be relatively rare.

In any case, the reader device transmits a second message. Each UE responds to this second message with a third message that includes its unique identifier, usually in encrypted form. The reader device provides the data included in these third messages to the requesting core network. The core network can determine which particular UEs responded (as it can decrypt the unique identifiers) and carry out any other necessary analysis (e.g., count the number of responding UEs). However, because UEs are typically constrained devices then this process can expend system resources and use a proportion of the available power of the UE. In extreme cases, a UE cannot fully respond to further interrogations as its power resources may be partially or fully depleted. Therefore, incorrect information may be provided to the core network.

Therefore, there is required a system and method that solves this problem.

### Summary of the Invention

User equipment (UE) such as an ambient internet of things (A-loT) device can rely on an external power source, with the aid of an energy harvester. Therefore, the UE can be used for an extended period without the need to replace an internal energy source. The UE can harvest small amounts of energy (e.g., stored in a capacitor) that may provide enough power for the UE to activate needed internal components and respond or backscatter to an interrogation by a reader device one or more times. However, if the UE needs to respond to multiple messages or if large messages need to be processed, this may expend energy faster than the energy harvester can make electrical power. In this situation the UE will eventually fail to respond to an interrogation due to lack of power.

When a reader device receives a request (e.g., from a core network) to interrogate one or more UE, a first step is to page those UEs. For example, this may be an initial or paging message to all UEs that can receive the message or be directed to a subset of UEs. UEs will respond to the initial message, usually with a random number. This is known as the first message (i.e., each UE that receives the initial or paging message responds with its own first message). Where only a subset of UEs meet criteria to respond (e.g., the initial message includes data defining a subset of UEs) then it is only the required subset that responds to the initial message with the first message.

The reader device may respond to the first message with a second message. The second message can also include collision information specifying random numbers that are received from more than one UE. This prompts those particular UEs to generate a new random number and resend their first message. This continues until each UE has generated a different random number and these are received by the reader device.

There may be different types of request sent to the reader device from the core network. A usual request is for an inventory procedure. This requires each UE to provide the reader device with a unique identifier of the UE (usually as a third message transmitted from each UE to the reader device as a third message in response to the second message). These unique identifiers are then returned to the requestor (e.g., the core network or a component of the core network), usually in encrypted form. However, the requestor may not need full inventory information. Therefore, a further type of request may be described as a discovery (only) procedure. The requestor may only need to know how many UEs are present or how many of a particular group, subset or type are present. In this case, there is no need for the UEs to provide their unique identifier (which is static and different to the generated random number) and there is no need for the reader device to send the second message, unless more than one UE generates and transmits the same random number. In existing implementations, the unique identifier is always provided (whether or not it is required by the requestor). However, in the present described enhanced procedure, the reader device can indicate to the UE or UEs that the third message is not required. This may be based on the request type received by the reader device from the requestor (e.g., the core network). The indication may be provided within the initial message and/or in the second message if sent by the reader device. The indication may take the form of a single bit in either or both messages, which further reduces processing and transmission power.

For example, the reader device may determine that the request is a discovery only request. Therefore, the requester does not require the unique identifiers of each UE (from all or a subset of UEs). This may prevent the reader device from sending the second message. However, a second message may still be required to resolve duplicate random numbers or for other reasons. To prevent the UEs from responding to the second message, the second message may include an indication (a one-bit flag or data unit) that informs the UEs not to respond (except for those with duplicate random numbers). This indication may also be provided within the initial message.

The first message, the second message and the third message are different types of message and may be described as a first message type, a second message type and a third message type, respectively. The first message type may also be described as an UE response message or an UE response message type. The second message type may also be described as a reader response message or a reader response type message. The third message type may also be described as a further UE response message or a further UE response type message.

There may be different ways in which the third messages are prevented from being sent by the UE. One method is for the reader device not to send a second message (or be prevented from doing so) or to not send a second message (or not to send a second message after collisions between different UEs sending the same random numbers have been resolved). Even if duplicate random numbers are sent by different UEs, the reader device may be able to determine that they have come from different UEs (e.g., they were sent at different times). Therefore, in some example implementations, all second messages may be avoided.

This can be achieved by the reader device determining that third messages from the UEs are not required (and/or no second message should be sent). The reader device can determine this from the request that it receives to interrogate the UEs (e.g., from the core network). For example, some types of request may require the full interrogation response (with all UEs providing their unique identifiers, which can then be sent from the reader device to the original requestor) and other request types only requiring a total number of responding UEs. In an example implementation, the request may be configured to contain a data element (e.g., a one-bit data flag) indicating to the reader device that it does or does not need to obtain a full response (third message) from all UEs. The reader device may also be aware that some particular requesters require the full response and others do not. Therefore, the reader device can determine from information or data contained within the request whether or not second messages should be transmitted. This implementation has an advantage that no changes are required to UEs as they will not respond with third messages if they do not receive second messages.

In a further example implementation, the UE (or UEs) determines whether or not a third message is required (in response to a second message sent by the reader device). The UE determines this based on information or data received from the reader device. This information may be contained within the initial message and/or the second message sent by the reader device. For example, this information may indicate that this is part of an inventory procedure and can optionally include an identification that the procedure is only for discovery (i.e., individual unique UE identifiers are not required). Therefore, even if the UE receives a second message (e.g., after any collisions have been resolved), the UE does not send a third message in response (when determining that no third message is required). When a collision or contention procedure is required to resolve different UEs sending the same random number, the second messages sent by the reader device to resolve this may contain the data or indication that the third messages are not required. However, if the data or information from the reader device indicates that the third message is required then this is sent by the UE, as usual.

The reader device may configure or send the information or data indicating the need (or not) for the third message based on its own determination, for example. This may also be determined from information or data contained within the request to interrogate that it receives (e.g., from the core network).

Both implementations can be combined. The reader device may be prevented from sending the second messages (or allowed to send them) based on data or information received in a request for interrogation. Even if they are sent (or not prevented), the UE may receive from the reader device data indicating whether or not a third message is required.

In accordance with a first aspect, there is provided a method for communicating with user equipment, UE, the method comprising the steps of:
a reader device receiving a request to interrogate one or more UE;
in response to the request, the reader device transmitting an initial message to the one or more UE;
the one or more UE responding to the initial message by transmitting a first message;
the reader device responding to the first message by sending a second message to the one or more UE unless the request received by the reader device to interrogate the one or more UE comprises data indicating that the second message is not required; and
when a second message is sent by the reader device to the one or more UE, the one or more UE responding to the second message with a third message unless data is received from the reader device by the one or more UE indicating that a response to a second message is not required. Therefore, the message volume and data requirements can be reduced for different types of requests and especially where only information on the total number of devices present is required.

Optionally, the data from the reader device indicating that a response to the second message is not required may be included in the initial or paging message and/or the second message. There may be different ways in which the one or more UE is provided with information causing it not to respond to a second message (if one is sent). Typically, the second message is sent if a full inventory request (requiring full details from individual UEs) is made or if different UEs respond with the same temporary identifier. In this case, a response from only those UEs that generated the same temporary identifier is required (to resolve conflicts). The other UEs do not need to respond with a third message when they are informed that this is not required. Therefore, conflict resolution can take place without the remaining (unconflicted) UEs responding and expending unnecessary energy to do so.

Optionally, the data from the reader device indicating that a response to the second message is not required may be provided as one bit data. Therefore, this functionality requires very little overhead or message data increase. The single bit may be added to a field in the message header, for example.

Optionally, the data of the request received by the reader device indicating that a second message is not required may be provided as one bit data. Similarly, the request received by the reader device (e.g., from an external server) may also take the form or a single bit (e.g., within a header), which reduces bandwidth and processing requirements.

Preferably, the first message may include a random number generated by the one or more UE. This can form the basis of a temporary identifier for each UE that responds and avoids the need for each UE to retrieve, encrypt, and send its full unique identifier. The temporary identifier can be smaller than the unique identifier.

Preferably, the method may further comprise the steps of:
when more than one UE includes the same random number in the first message, the reader transmitting a message comprising data causing the more than one UE including the same random number in the first message to generate a new random number and provide a further first message including the new random number. Therefore, a more accurate total number of UEs can be determined in the fairly rare occurrence of a conflict arising (the same random number being generated by more than one UE).

Optionally, the message comprising data causing the more than one UE including the same random number to generate the new random number and to provide a further first message may be an alternative second message, and wherein the data comprises the same random number in the first message of the more than one UE, wherein the alternative second message is sent by the reader device even when the request received by the reader device to interrogate the one or more UE comprises data indicates that a second message is not required. Therefore, the alternative second message is only sent when a conflict arises between two or more UEs (i.e., generating the same temporary identifier or random number).

Preferably, the method may further comprise the step of the reader device counting the number of first messages from the one or more UE with different random numbers. This may be the number of random numbers first generated, or more preferably if there are conflicts, then the total number of random numbers generated after all conflicts have been resolved.

Advantageously, the number of first messages with different random numbers may be sent to a core network, component of the core network, or a server within or outside of the core network from the reader device. The request sent to the reader device may be sent from the core network

Optionally, the request received by the reader device to interrogate the one or more UE may be received from a core network, a component within the core network, or a server within or outside of the core network. Other entities (internal or external to the reader device) may issue the request.

Optionally, the initial message may include data identifying a subset of UEs to respond with the first message. Therefore, only some of the available UEs may respond. These may be defined or selected by UE ID, type or other criteria that may be included in the original request, and/or initial message. Alternatively, all UEs that that receive the initial or paging message may respond.

Preferably, the one or more UE may be one or more ambient internet of things (A-loT) devices. Other types of UE or devices can be used.

Optionally, the third message may comprise data at least derived from a unique identifier of the one or more UE. This may be an encrypted form of the UE ID for security reasons. The encrypted UE ID may be sent to the requestor (e.g., server or component of the core network) for decryption. This may be used as part of an inventory request and response where full information about the UEs is required.

According to a second aspect there is provided user equipment, UE, comprising:
a processor; and
memory storing computer-executable instructions that, when executed by the processor, cause the UE to:
   receive an initial message from a reader device;
   in response to the initial message transmit a first message to the reader device;
   receive a second message from the reader device; and
   responding to the second message with a third message unless data is received from the reader device indicating that a response to the second message is not required. One or more UEs may be included. The UEs may be the same or of different types.

According to a third aspect there is provided a reader device comprising:
a processor; and
memory storing computer-executable instructions that, when executed by the processor, cause the reader device to:
   receive a request to interrogate one or more UE;
   in response to the request transmit an initial message to the one or more UE;
   receive from the one or more UE a first message in response to the initial or paging message;
   transmit a second message to the one or more UE in response to the first message unless the request received by the reader device to interrogate the one or more UE comprises data indicating that the second message is not required; and
   when the second message is transmitted, determine to transmit data to the one or more UE indicating that a response to the second message is not required based on a request received from a core network or a component of the core network. One or more reader devices may be included.

Optionally, the computer-executable instructions further cause the reader device to:
count the number of first messages from the one or more UE; and
transmit the number of first messages to the core network or the component of the core network.

According to a fourth aspect, there is provided a system comprising:
one or more of the UE described above; and
any one or more of the reader device described above.

Optionally, the data indicating the messages to or from the UE may be contained within any one or more of:
a physical layer;
physical device to reader channel (PDRCH);
an application layer;
a MAC layer;
MAC control element (MAC CE); and/or
radio-network temporary identifier.

The PDRCH is a physical device to reader channel used for Uplink and the PRDCH is the physical reader to device channel used for Downlink. The application layer can be a NAS layer and/or an application layer.

Optionally, the one or more UE may be powered by and energy harvester according to any one or more of:
solar cell;
radio frequency inductor; and/or
thermocouple. Other energy harvesters may be used. The UE may also have one or more sensors (e.g., location, temperature, pressure, humidity, movement, etc.).

Optionally, the energy store may be a capacitor or a secondary battery.

Optionally, the server, may be a component of a core network. The server may also be external to the core network.

The methods described above may be implemented as a computer program comprising program instructions to operate a computer. The computer program may be stored on a computer-readable medium, including a non-transitory computer-readable medium.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for interrogating user equipment (UE);
FIG. 2 shows a flowchart of a method for interrogating the UE of Figure 1;
FIG. 3 shows a schematic diagram of a computer system used to implement the method of Figure 2;
FIG. 4 shows a schematic diagram of messaging architecture used within the system of Figure 1;
FIG. 5 shows a schematic diagram of further messaging architecture used within the system of Figure 1;
FIG. 6 shows a diagram illustrating message flow within the system of Figure 1;
FIG. 7 shows a diagram illustrating an example message format used in the method of Figure 2;
FIG. 8 shows a diagram illustrating a prior art message flow within the system of Figure 1; and
FIG. 9 shows a diagram illustrating a message flow, according to an example implementation.

It should be noted that the figures are illustrated for simplicity and are not necessarily drawn to scale. Like features are provided with the same reference numerals.

### Detailed description of the preferred embodiments

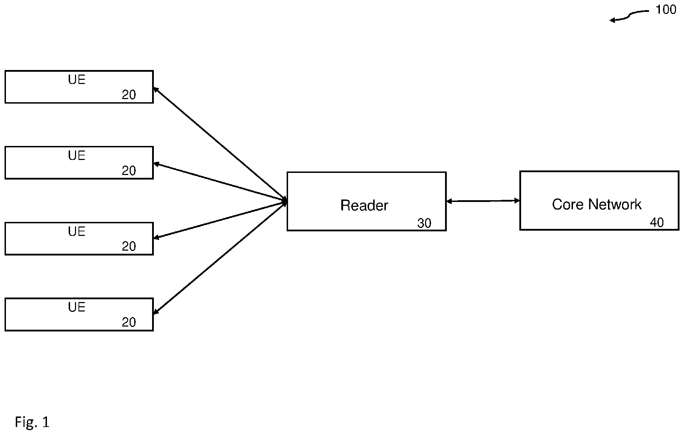

Figure 1 shows a schematic diagram of a system 100 for interrogating or reading one or more user equipment (UE) 20 using a reader device 30 that is in communication with and takes commands from a core network 40 or other external entity. The core network 40 can communicate with, manage, send and receive commands and data to a plurality of reader devices 30 even though only one reader device 30 is shown in this figure. It should be noted that the reader device 30 may itself be a UE or may otherwise contain components and functionality to communicate with the core network 40 (e.g., using a cellular network). The UE 20 may also be described as a tag or device.

The one or more UE 20 can be passively powered, for example. Interrogation may involve the reader device 30 providing radio frequency (RF) energy that can be harvested by each UE 20, used to temporarily power the UE 20, and also prompt the one or more UE 20 to respond to the interrogation signal by providing data, an acknowledgement or other signal (e.g., backscatter). The reader device 30 can use the information contained within the responses directly and/or transmit this information or command data to the core network 40 for further processing.

The one or more UE 20 may use different sources of power. However, they typically do not contain a battery (primary or secondary) to provide long term power (e.g., greater than a few minutes to an hour) that can be recharged by a wired or wireless source. Instead, the one or more UE 20 may contain a relatively simple energy harvesting component such as a coil or antenna, a solar cell, a thermocouple, a mechanical energy harvester or any other component. The harvested energy may be stored for a short period of time (e.g., one to two seconds to 10 minutes). The energy may be stored by one or more capacitors and/or inductors or a small secondary battery (e.g., 1-10 mWh). This harvested electrical energy may be used to respond to one or more interrogations from the device reader 30. However, when insufficient energy is available or has been used up (depleted) then the UE 20 may be unable to respond until the energy store has been replenished sufficiently. Each UE 20 may harvest and store more energy than required for a particular single response.

However, some responses may require more energy than others. For example, an interrogation that requires a response including a sensor reading may require more bits (as well as powering the sensor) and so more energy will be required to transmit than a simple response (e.g., to acknowledge a command). Furthermore, a response that requires the UE 20 to retrieve its unique identifier (ID) from internal secure storage, encrypt, or otherwise process the unique ID and transmit a message containing the unique ID can require much more processing power and energy than a simple acknowledgement or generating and transmission of a small temporary ID. This is because the unique ID can be larger (e.g., 100 bits) and the temporary ID is preferably smaller. This energy and effort can be reduced by preventing the UE 20 from carrying out the extra processing unless it is required.

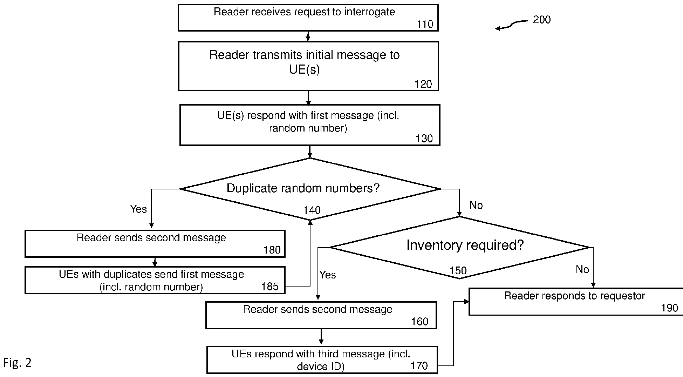

Figure 2 shows a flow chart of a method 200 for operating the system 100 of Figure 1. At step 110 the reader device 30 receives a request or instruction to interrogate the one or more UEs 20. This request may be received from the core network 40. The request may include information that can be used to determine what type of interrogation to perform. For example, the request may indicate that only device discovery is required. In an example embodiment, this information may be included in the request as a single bit (e.g., within header of the request). The inclusion of the single bit may indicate that the request is a discovery request only. In this case, the reader device 30 determines that the one or more UE 20 does not need to respond with its unique ID. Therefore, the request is to discover how many UEs 20 are present and unique information regarding any particular UE 20 is not required. Alternatively, the request may be an inventory request (e.g., the single bit in the header of the request is missing). In this case, the requestor requires data identifying each responding UE (e.g., their unique identifier). Other types of requests may be sent to the reader device 30.

At step 120 the reader device interrogates the one or more UEs 20 (e.g., by transmitting an RF signal prompting the UEs 20 to respond).

At step 130, the UEs 20 respond to the interrogation by generating a random number and transmitting a first message to the reader device 30 including the random number. The random number preferably comprises fewer data than the unique identifiers of the UEs 20 and so may be transmitted using fewer system resources of the UE 20. However, there is a relatively small probability that two or more UEs 20 will respond with the same random number because each UE 20 does not have knowledge of the random numbers generated by other UEs 20. Therefore, at step 140 the reader device 30 determines if two different received first messages (i.e., from different UEs 20) contain the same random number. This may be achieved by determining that two messages received at different times contain the same random number or for messages with different message identifiers, for example.

When different first messages (from different UEs 20) are received at different times and/or with different message identifiers and contain the same random number then this may be described as a collision or contention and must be resolved. This is accomplished by the reader device 30 sending a second message whatever the nature of the original request (inventory or discovery) at step 180. This may be described as an alternative second message (the usual second message is sent by the reader device to UEs 20 only when an inventory request is made). The alternative second message may contain information used to identify the contentious UEs 20 (those generating the same random number). For example, this may be the actual duplicate random number or numbers. The UEs 20 receiving the alternative second message containing their own random number can then generate a new random number and resend a further first message at step 185. Step 140 is repeated in case the new random number is the same as another random number already generated by any one or more of the UEs. The loop continues (steps 140, 180 and 185) until each UE 20 has generated a different random number included in a first message to the reader device 30.

When all random numbers are unique then the reader device 30 only sends a second message (e.g., an acknowledgment message to the UEs 20) if an inventory-type request has been made. This is determined at step 150 but may be done any time after the original request was received. If the request is only a discovery-type request, then no second message is required or sent (unless there is a contention, as described previously). The reader device 30 can respond to the requestor by counting the number of unique random numbers. The total number of unique random numbers is sent or transmitted to the requestor at step 190. For most discovery requests, no second messages are required at all, leading to improved efficiency and lower power usage for the UEs 20 and reader device 30.

However, if an inventory-type request was made then the unique identifiers of each UE 20 need to be sent back to the requestor (e.g., in encrypted form). Therefore, the reader device sends a second message at step 160. This prompts the UEs 20 to respond with their third message (only required for inventory requests), which includes their unique identifiers (e.g., in encrypted form) at step 170. The reader device 30 can respond to the requestor with these unique identifiers (step 190) instead of sending a total number.

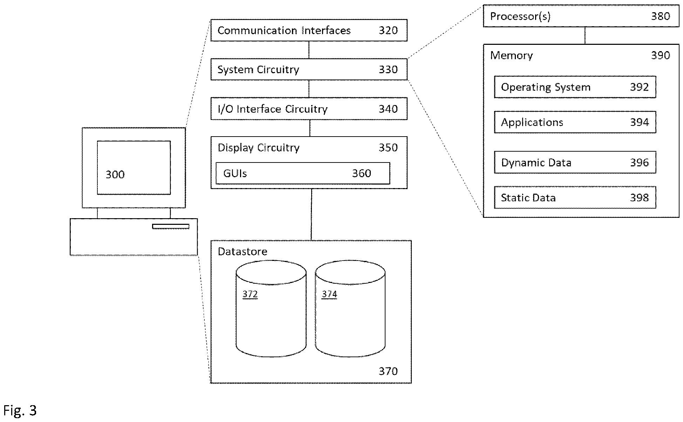

The reader device 30 and/or a component or server of the core network 40 may take the form of a computer system. As shown in Figure 3, such a computer system 300 includes a number of components including communication interfaces 320, system circuitry 330, input/output (I/O) circuitry 340, display circuitry and interfaces 350, and a datastore 370. The system circuitry 320 can include one or more processors or CPUs 380 and memory 390. The system circuitry 330 may include any combination of hardware, software, firmware, and/or other circuitry. The system circuitry 330 may be implemented, with one or more systems on a chip (SoC), application specific integrated circuits (ASIC), microprocessors, and/or analogue and digital circuits.

The display circuitry may provide one or more graphical user interfaces (GUIs) 360 and the I/O interface circuitry 340 may include touch sensitive or non-touch displays, sound, voice or other recognition inputs, buttons, switches, speakers, sounders, and other user interface elements. The I/O interface circuitry 340 may include microphones, cameras, headset and microphone input /output connectors, Universal Serial Bus (USB) connectors, and SD or other memory card sockets. The I/O interface circuitry 340 may further include data media interfaces (e.g., a CD-ROM or DVD drive) and other bus and display interfaces.

The memory 390 may include volatile (RAM) or non-volatile memory (e.g., ROM or Flash memory). The memory may store the operating system 392 of the computer system 300, applications or software 394, dynamic data 396, and/or static data 398. The datastore or data source 370 may include one or more databases 372, 374 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

The architecture of an RFID system differs in many aspects compared to legacy 3GPP systems. Some of these differences are described below in an RFID:
No PDCP layer and no functionalities corresponding to it;
No RLC layer and no functionalities associated to it. The exception might be done to segmentation;
No RRC functionalities, no SIB broadcasts, no RRC states, No RRC connected mode Handovers, No reselections based on any thresholds broadcasted;
The physical layer access is based on slotted aloha and might be realised in TDM and FDM manner;
RFID devices typically have a power consumption ~1 µW or several 100 µW and are battery free (tags) where the energy harvesting can be provided by a separate node or other source (e.g. solar energy).

According to 38.848 (3GPP):
A design target having a maximum message size of approximately 1000 bits in Downlink or Uplink for an A-loT device (UE 20), based on a maximum application layer packet size. Latency may be between 1 and 10 seconds.

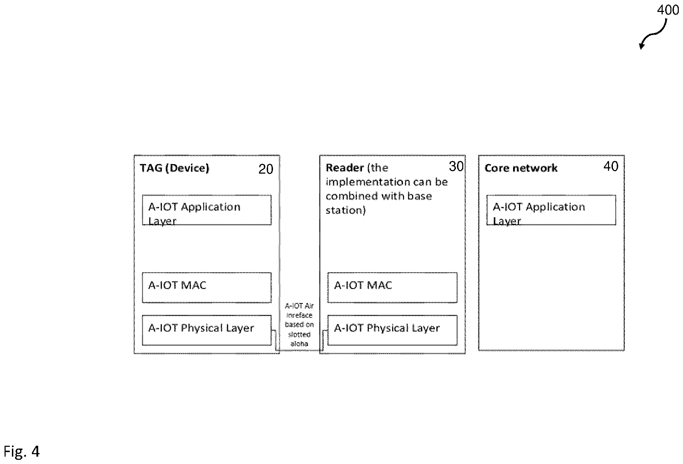

Figure 4 shows an example architecture 400 for A-loT and its protocol stack design. In these examples, the A-loT device may also be described as user equipment (UE). Figure 4 shows the A-loT system without an intermediate node.

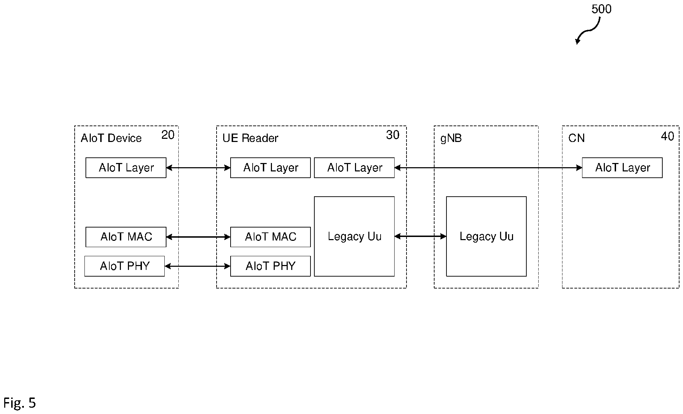

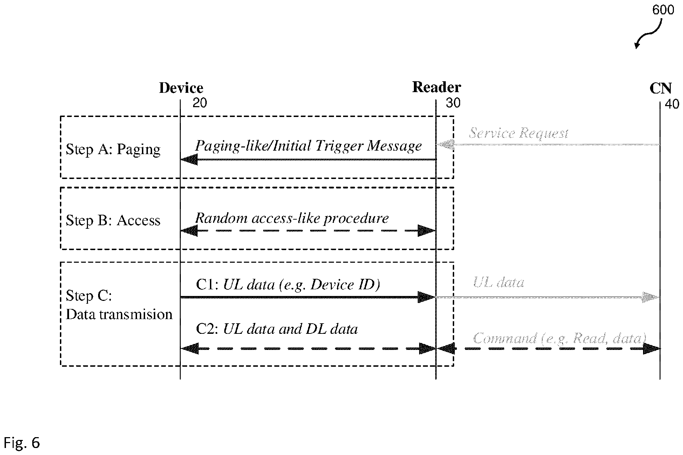

Due to the coverage difficulties, a UE (e.g., different to those UEs 20 acting as tags and being interrogated) may also be acting as the reader device 30. An example architecture 500 of this form is shown in Figure 5 (A-loT architecture with UE as a reader device 30). As it can be seen in this figure, the A-loT system is very different to the original 3GPP system in many aspects and the supported procedures may be very limited. In general, the network (core network 40) may issue a trigger through the reader device 30 causing each UE 20 to wake up and to backscatter a response or answer to the reader device 30. This requires the core network 40 to send a "service request" to the reader device 30, which will provide the initial triggering message (a bit comparable to the paging as used in 3GPP systems). The UE 20 (tag or device) performs a radio access procedure using a slotted aloha mechanism, for example, which operates analogous to RACH. In general, this operates in a similar way to the architecture 600 to that of R2-2403097 shown in Figure 6.

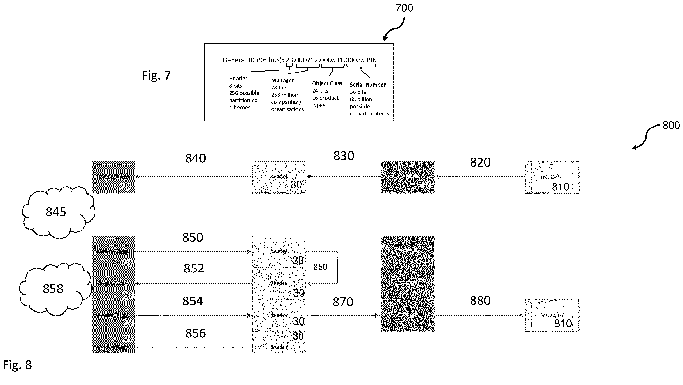

The system 100 may be designed to be efficient, so that the UEs 20 (tags) do not require a battery and instead rely on other energy sources. As described above, the UEs 20 can respond with their unique identifier). In an RFID system, such identifiers take the form of electronic product code (EPC) identifiers, which can have difference sizes (e.g., 96 bits) and include several components. Identifiers used with the current system 100 (based on 3GPP) therefore supports at least 96 bits and usually more. An example third message 700 is shown in Figure 7.

Figure 8 illustrates an example message flow 800 between the core network 40, the reader device 30 and one or more UEs 20. Figure 8 illustrates the prior art process in which each UE 20 will attempt to respond with the third message and the reader device 30 transmits the second messages for all request types. This message flow illustrates the additional resources and processing required.

A server 810 initiates the request to the core network 40, as illustrated by arrow 820. The server 810 can determine the type of request, that may be directed to all UEs 20, to a particular UE identifier (UE ID), a group of UEs 20 (Group ID), an inventory request and/or a command to be applied to the required UEs 20. This request is passed on through the core network 40 (arrow 830) to the reader device 30. The reader device 30 receives and processes this request to form an initial (paging) message, which can optionally include UE ID, multiple UE IDs, Group ID, no ID (all devices), and/or other information. This initial (or paging) message is transmitted to the UE 20 or UEs 20 (arrow 840). The server 810 can be external to the core network 40 or be a component of the core network 40, for example.

The lower left block of flows in Figure 8 illustrates a series of communications between the UE(s) 20 and the reader device 30. Arrow 850 illustrates the first message transmitted from the UE(s) 20 to the reader device 30. The first message includes a random number generated by each responding UE 20. Cloud 845 represents internal processing such as L1 resource assignment, the temporary random number generation and backscattering by the UE 20 in response to the initial (paging) message. Arrow 850 illustrates a confirmation message (second message) sent by each UE 20, which includes the random number or temporary device identifier and each UE 20 that responded can send a personalised response. A second message is transmitted by the reader device 30 to the one or more UE 20 (arrow 852). This second message two also defines resources (e.g., radio resources) that can be used to send the third message back from each responding UE 20.

Arrow 854 illustrates the third message being sent by each responding UE 20, including its permanent device identifier (ID) to the reader device 30 (see Figure 7). Cloud 858 illustrates the UE 20 extracting (and encrypting) its device ID from memory and carrying out any other tasks. The device ID may take the form of network access server NAS (NAS-ID), for example. The reader device 30 can optionally respond with a further acknowledgement message (arrow 856).

Loop 860 represents any required collision or conflict resolution that may be required if more than one UE 20 generates the same random number (temporary ID). In this case, the reader device 20 can indicate in the second message that a new first message (from UEs 20 that generated the same number) is required that contain new random numbers. Loop 860 continues until each UE 20 has provided a different random number or temporary ID.

Arrow 870 represents schematically the delivery of inventory information from the reader device 30 to the core network 40. This is a response to the initial request and is passed back to the requesting server 810 from the core network 40. The inventory delivery message may contain all device IDs in encrypted form (e.g., NAS-ID). The server 810 can decrypt the NAS-IDs to determine which particular UEs 20 are present.

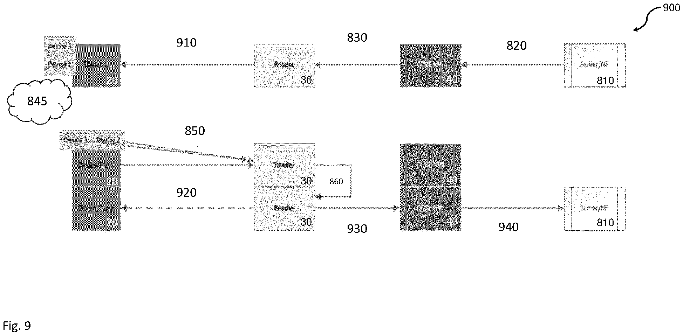

Figure 9 shows schematically the enhanced process 900, which reduces complexity and required system resources. Furthermore, fewer and smaller messages need to be processed by the UEs 20 improving energy use. The same or similar steps have the same reference numbers as described with the method 800 of Figure 8. In particular, the process 900 of Figure 9 starts with the server 810 making a similar request 820 that is sent through the core network 40 to the reader device 30. However, in this case the request can specify, define, or otherwise indicate that only a discovery process is required (i.e., rather than an inventory request). This information may be conveyed as a signal bit or in another way. The discovery process may be described as only requiring the number of different UEs 20 that respond rather than obtaining the individual identities of each UE20. A similar initial (paging) message 910 is sent to one or more UEs 20. However, the initial (paging) message 910 in this case may include data indicating that a response to the second message is not required. Alternatively, these data (that may be included as a single bit) can be included in an optional second message or the alternative second message, if necessary.

Therefore, the communication between the reader device 30 and the one or more UE 20 can cease with the UE(s) providing their first message (including random numbers) 850. If conflict resolution 860 is required then the alternative second message 920 can be provided, as described with reference to Figure 8. Alternatively, the second message 920 may be provided as a confirmation only specifying that the not third message from the one or more UEs 20 do not need to be sent.

The reader device 30 counts the unique random numbers obtained from the first messages received from the responding UEs 20. This number is transmitted as a response (arrow 930) through the core network 40 and onto the requesting sever 810 (arrow 940). Therefore, the required information is provided without each UE 20 needing to retrieve it long (~100 bit) unique identifier from memory, encrypt the number and send as the second message. This reduces the necessary system resources.

3GPP has already defined two A-loT physical channels: A-loT packet device to reader channel (PDRCH) in Uplink PRDCH in downlink and either or both may be used for transmitting the data between the UE 20 and reader device 30.

The following provides a step-by-step flow of a further example implementation.

STEP1: The reader device 30 includes within the initial or paging message a request for the UE 20 (e.g., tag or for a group of tags) to start a messaging procedure and can optionally include an indication that the procedure is only for discovery.

STEP2: The UE 20 or the UEs belonging to a group generate a random number of e.g., 16 bits, allocate corresponding physical resources and submit the first message (msg 1).

STEP3: The reader device 30 performs a contention resolution (if necessary) and when successful, informs the core network 40 the number of UEs 20 (devices) based on the number of different random numbers transmitted from the queried UEs 20, discovered after a pre-defined time for such a discovery procedure.

STEP4: Optionally, a second message (msg 2) could be submitted or transmitted by the reader device 30 to the UE 20 or UEs 20 either informing the UE 20, that contention resolution was successful or requesting a particular UE 20, to generate a new random number and transmit a further (new) msg 1. This second message may include an indication (e.g., as a single bit) that the third message (msg 3) is not required as alternative to or in addition to the indication within the initial (paging) message.

An advantage of including the indication data in the initial (paging) message is in situations where msg 3 and msg 1 may be combined (similar to 2 step RACH approach). This can be especially useful when there are fewer devices present (e.g., up to around 10 UEs 20) and the system can provide enough resources for these combined messages. In this case, such indication would provide a benefit to the UE not to include the full device ID in the combined message. In case the amount of the devices is higher (e.g., greater than 10), it may be more advantageous to include this information in the second message (msg 2), especially when the message is a mandatory one. An additional advantage for the UE 20 is that it would not need to decode the msg 2 (because it is not transmitted by the reader device 30, which further saves power and resources.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, whilst only a single reader device is shown in the figures, any number may be used to interrogate the same UEs or different UEs at different locations.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

The following numbered clauses provide further example implementation details:
A1. A method for communicating with user equipment, UE, the method comprising the steps of:
   a reader device receiving a request to interrogate one or more UE;
   in response to the request, the reader device transmitting an initial message to the one or more UE;
   the one or more UE responding to the initial message by transmitting a first message;
   the reader device determining that a second message sent to the one or more UE is required or is not required based on data in the request to interrogate the one or more UE;
   the reader device responding to the first message by sending a second message to the one or more UE unless the request received by the reader device to interrogate the one or more UE comprises data indicating that the second message is not required; and
   when a second message is sent by the reader device to the one or more UE, the one or more UE responding to the second message with a third message.
A2. The method of clause A1, wherein the data of the request received by the reader device indicating that a second message is not required is provided as one bit data.
A3. The method of clause A1 or clause A2, wherein the first message includes a random number generated by the one or more UE.
A4. The method of clause A4 further comprising the steps of:
   when more than one UE includes the same random number in the first message, the reader transmitting a message comprising data causing the more than one UE including the same random number in the first message to generate a new random number and provide a further first message including the new random number.
A5. The method of clause A4, wherein the message comprising data causing the more than one UE including the same random number to generate the new random number and to provide a further first message is an alternative second message, and wherein the data comprises the same random number in the first message of the more than one UE, wherein the alternative second message is sent by the reader device even when the request received by the reader device to interrogate the one or more UE comprises data indicates that a second message is not required.
A6. The method according to any of clauses A3 to A5 further comprising the step of the reader device counting the number of first messages from the one or more UE with different random numbers.
A7. The method of clause A6, wherein the number of first messages with different random numbers is sent to a core network, a component of the core network, or a server within or outside of the core network from the reader device.
A8. The method according to any previous clause, wherein the request received by the reader device to interrogate the one or more UE is received from a core network, a component within the core network, or a server within or outside of the core network.
A9. The method according to any previous clause, wherein the initial message includes data identifying a subset of UEs to respond with the first message.
A10. The method according to any previous clause, wherein the one or more UE are one or more ambient internet of things, A-loT, devices.
A11. The method according to any previous clause, wherein the third message comprises data at least derived from a unique identifier of the one or more UE.
A12. A reader device comprising:
   a processor; and
   memory storing computer-executable instructions that, when executed by the processor, cause the reader device to:
      receive a request to interrogate one or more UE;
      in response to the request transmit an initial message to the one or more UE;
      receive from the one or more UE a first message in response to the initial message;
      determine that a second message sent to the one or more UE is required or is not required based on data in the request to interrogate the one or more UE;
      transmit a second message to the one or more UE in response to the first message unless the request received by the reader device to interrogate the one or more UE comprises data indicating that the second message is not required; and
      when the second message is transmitted, receive a third message in response to the second message.
A13. The reader device of clause A12, wherein the computer-executable instructions further cause the reader device to:
   count the number of first messages from the one or more UE; and
   transmit the number of first messages to the core network or the component of the core network.
A14. A system comprising:
   one or more user equipment (UE); and
   the reader device of clause A12 or clause A13.
B1. A method for communicating with user equipment, UE, the method comprising the steps of:
   a reader device receiving a request to interrogate one or more UE;
   in response to the request, the reader device transmitting an initial message to the one or more UE;
   the one or more UE responding to the initial message by transmitting a first message;
   the reader device responding to the first message by sending a second message to the one or more UE;
   the one or more UE determining from data received from the reader device that a response to the second message as a third message is required or is not required; and
   when the one or more UE determines that a third message is required responding to the second message with the third message.
B2. The method of clause B1 further comprising the reader device determining that the response to the second message as the third message is required or is not required based on data in the request to interrogate the one or more UE before the data is received from the reader device indicating that a response to the second message as the third message is required or is not required.
B3. The method of clause B1 or clause B2, wherein the data from the reader device indicating that a response to the second message is not required is included in the initial message and/or the second message.
B4. The method according to any previous clause, wherein the data from the reader device indicating that a response to the second message is not required is provided as one bit data.
B5. The method according to any previous clause, wherein the data of the request received by the reader device indicating that a second message is not required is provided as one bit data.
B6. The method according to any previous clause, wherein the first message includes a random number generated by the one or more UE.
B7. The method of clause B6 further comprising the steps of:
   when more than one UE includes the same random number in the first message, the reader transmitting a message comprising data causing the more than one UE including the same random number in the first message to generate a new random number and provide a further first message including the new random number.
B8. The method of clause B7, wherein the message comprising data causing the more than one UE including the same random number to generate the new random number and to provide a further first message is an alternative second message, and wherein the data comprises the same random number in the first message of the more than one UE, wherein the alternative second message is sent by the reader device even when the request received by the reader device to interrogate the one or more UE comprises data indicates that a second message is not required.
B9. The method according to any of clauses B6 to B8 further comprising the step of the reader device counting the number of first messages from the one or more UE with different random numbers.
B10. The method of clause B9, wherein the number of first messages with different random numbers is sent to a core network, a component of the core network, or a server within or outside of the core network from the reader device.
B11. The method according to any previous clause, wherein the request received by the reader device to interrogate the one or more UE is received from a core network, a component within the core network, or a server within or outside of the core network.
B12. The method according to any previous clause, wherein the initial message includes data identifying a subset of UEs to respond with the first message.
B13. The method according to any previous clause, wherein the one or more UE are one or more ambient internet of things, A-loT, devices.
B14. The method according to any previous clause, wherein the third message comprises data at least derived from a unique identifier of the one or more UE.
B15. A user equipment, UE, comprising:
   a processor; and
   memory storing computer-executable instructions that, when executed by the processor, cause the UE to:
      receive an initial message from a reader device;
      in response to the initial message transmit a first message to the reader device;
      receive a second message from the reader device;
      determine from data received from the reader device that a response to the second message as a third message is required or is not required; and
      when the data received from the reader device indicates that a response to the second message is required responding to the second message with a third message.
B16. A reader device comprising:
   a processor; and
   memory storing computer-executable instructions that, when executed by the processor, cause the reader device to:
      receive a request to interrogate one or more UE;
      determine that a response to a second message as a third message is required or is not required based on data in the received request;
      in response to the request transmit an initial message to the one or more UE;
      receive from the one or more UE the first message in response to the initial message;
      transmit the second message to the one or more UE in response to the first message; and
      when the response to a second message as a third message is required receiving the third message from the one or more UE, wherein data is sent from the reader device to the one or more UE indicating that the response to the second message as a third message is required or is not required.
B17. The reader device of clause B16, wherein the data sent from the der device to the one or more UE indicating that the response to the second message as a third message is required or is not required is included within the initial message and/or the second message.
B18. The reader device of clause B17, wherein the computer-executable instructions further cause the reader device to:
   count the number of first messages from the one or more UE; and
   transmit the number of first messages to the core network or the component of the core network.
B19. A system comprising:
   the UE of clause B15; and
   the reader device of clause B16 to B18.

## Claims

1. A method for communicating with user equipment, UE, the method comprising the steps of:
a reader device receiving a request to interrogate one or more UE;
in response to the request, the reader device transmitting an initial message to the one or more UE;
the one or more UE responding to the initial message by transmitting a first message;
the reader device responding to the first message by sending a second message to the one or more UE unless the request received by the reader device to interrogate the one or more UE comprises data indicating that the second message is not required; and
when a second message is sent by the reader device to the one or more UE, the one or more UE responding to the second message with a third message unless data is received from the reader device by the one or more UE indicating that a response to a second message is not required.

2. The method of claim 1, wherein the data from the reader device indicating that a response to the second message is not required is included in the initial message and/or the second message.

3. The method of claim 1 or claim 2, wherein the data from the reader device indicating that a response to the second message is not required is provided as one bit data.

4. The method according to any previous claim, wherein the data of the request received by the reader device indicating that a second message is not required is provided as one bit data.

5. The method according to any previous claim, wherein the first message includes a random number generated by the one or more UE.

6. The method of claim 5 further comprising the steps of:
when more than one UE includes the same random number in the first message, the reader transmitting a message comprising data causing the more than one UE including the same random number in the first message to generate a new random number and provide a further first message including the new random number.

7. The method of claim 6, wherein the message comprising data causing the more than one UE including the same random number to generate the new random number and to provide a further first message is an alternative second message, and wherein the data comprises the same random number in the first message of the more than one UE, wherein the alternative second message is sent by the reader device even when the request received by the reader device to interrogate the one or more UE comprises data indicates that a second message is not required.

8. The method according to of claims 5 to 7 further comprising the step of the reader device counting the number of first messages from the one or more UE with different random numbers.

9. The method of claim 8, wherein the number of first messages with different random numbers is sent to a core network, a component of the core network, or a server within or outside of the core network from the reader device.

10. The method according to any previous claim, wherein the request received by the reader device to interrogate the one or more UE is received from a core network, a component within the core network, or a server within or outside of the core network.

11. The method according to any previous claim, wherein the initial message includes data identifying a subset of UEs to respond with the first message.

12. The method according to any previous claim, wherein the one or more UE are one or more ambient internet of things, A-loT, devices.

13. The method according to any previous claim, wherein the third message comprises data at least derived from a unique identifier of the one or more UE.

14. A user equipment, UE, comprising:
a processor; and
memory storing computer-executable instructions that, when executed by the processor, cause the UE to:
receive an initial message from a reader device;
in response to the initial message transmit a first message to the reader device;
receive a second message from the reader device; and
responding to the second message with a third message unless data is received from the reader device indicating that a response to the second message is not required.

15. A reader device comprising:
a processor; and
memory storing computer-executable instructions that, when executed by the processor, cause the reader device to:
receive a request to interrogate one or more UE;
in response to the request transmit an initial message to the one or more UE;
receive from the one or more UE a first message in response to the initial message;
transmit a second message to the one or more UE in response to the first message unless the request received by the reader device to interrogate the one or more UE comprises data indicating that the second message is not required; and
when the second message is transmitted, determine to transmit data to the one or more UE indicating that a response to the second message is not required based on a request received from a core network or a component of the core network.

16. The reader device of claim 15, wherein the computer-executable instructions further cause the reader device to:
count the number of first messages from the one or more UE; and
transmit the number of first messages to the core network or the component of the core network.

17. A system comprising:
the UE of claim 14; and
the reader device of claim 15 or claim 16.
